# EUROPEAN PATENT APPLICATION

(11) **EP 3 453 563 A1**
(43) Date of publication of application: **13.03.2019**
(21) Application number: 17190570.6
(22) Date of filing: 12.09.2017
(51) Int. Cl.: B60N 2/28

(54) **CAR SEAT FOR CHILDREN WITH AN INTEGRATED ISOFIX SYSTEM**

(71) Applicant: Zhejiang Ganen Technology Co., Ltd, Huangyan, Taizhou, Zhejiang (CN)
(72) Inventor: ROSSI, Federico, 10121 Turin (IT); SPEZIANI, Daniele, 10121 Turin (IT); ZHENG, HUI, 10121 Turin (IT); PAN, An, 10121 Turin (IT)
(74) Representative: Bruni, Giovanni

(57) **Abstract**

A car seat for children (1) having a body (9) and an ISOfix coupling system (100). The ISOfix coupling system (100) is integrated in said car seat for children (1) and is accommodated inside of a hidden small drawer (2) and in that said hidden small drawer (2) is located in the front (9 ') of the body (9) of the car seat for children (1).

## Description

The present invention relates to an innovative car seat for children, in particular of the "Ovetto" type, i.e. the 0+ group for ECE44 Standard and "from birth to 86cm" for the R129 phase 1 iSize regulation, which is suitable for children up to 13kg, i.e. from birth up to about 12-15 months, with ISOfix coupling system integrated in the seat itself. The "Ovetto" for babies is a car seat for children that allows the child to travel in the car in a lying position facing the travel direction. The "Ovetto" is a great solution as it allows the baby to fall asleep comfortably while in the car, and when arrived at destination, the "Ovetto" can be placed directly on the stroller without having to move and consequently have to wake up the baby.
As well known, the technical field is that of child safety systems that are mounted inside the cars. The current legislation regulated by Art. 172 of the Road Code and the ECE R44 standard and R129 phase 1 of EU approval legislation provides that child safety systems to be used on passenger cars shall be equipped with a system called "ISOfix". This system is an internationally-standardized "ISOfix" system and offers the safest, easiest and fastest way to properly install a car seat without using seat belts. The ISOfix name comes from ISO (International Standardization Organization) and FIX (Fixation = fixing). To secure the car seat directly to the car frame, the ISOfix system uses two connectors located in the base of the child seat and a third anchor point, called anti-rotation device, designed to prevent any rotating movement, which can be: a strap or a supporting leg.. The ISOfix connectors on the base of the child seat should be attached to the ISOfix couplings integrated into the car and located between the seatback and the seat base: thus a rigid connection between the seat and the car frame is created.
In addition, the "Ovetto" or the car seat for children of the 0+ Group for ECE44 standard and "from birth to 86cm" for the R129 1st phase iSize of EU approval legislation, should be installed opposite to the travel direction. In the event of a collision, in fact, the child's skeletal and muscular structure still underdeveloped may be more affected by slamming against the seat belt rather than against the seat back of the child seat.
All the seats of the 0+ Group, which are fixed with the "ISOfix" type and do not have the seat belts, have a so-called support "base" to be attached to the car seat. With the help of the base the "Ovetto" can be fixed more stable. This base can be equipped with ISOfix connectors and, in this case, allows the car seat for children to be securely fixed to the car and without the use of seat bels.
Most of the "Ovetto" on the market do not have an integrated base, therefore the base needs to be purchased separately. The base is also more practice in loading/unloading operations as well as to ensure greater stability and safety of the seats of the 0+ Group. Therefore there is the need for a car seat for children of the 0+ Group, which can be directly and securely attached to the car seat without any additional components, such as a support base.
In general, car seat for children of the Group 0+ for ECE44 standard and "from birth to 86cm" for R129 Phase 1 iSize of EU approval legislation, which have solutions to this technical problem and are able to provide a drawer that can be directly positioned on the car by means of an ISOfix coupling system integrated in the same "Ovetto" are still unknown.

The "Ovetto" object of the present invention is steadily fixed to the car by means of an ISOfix coupling system integrated in the child seat body which allows an easy and safe installation without the use of additional components.
The different embodiments of the invention will now be described, by way of example, with reference to the accompanying drawings in which:
Figure 1 is a side view of the "Ovetto" with the hidden small drawer of the ISOfix coupling system in closed configuration according to an embodiment of the present invention;
Figure 2 is a side view of the "Ovetto" with the hidden small drawer in open configuration, according to an embodiment of the present invention;
Figure 3 is a side view of the "Ovetto" with the hidden small drawer in open configuration and the ISOfix connectors in an extracted position, according to an embodiment of the present invention;
Figure 4 is a side view of the "Ovetto" in the configuration locked to the rods of the car seat according to an embodiment of the present invention;
Figure 5 is an axonometric view of the configuration of Figure 3;
Figure 6 is an exploded view of the "Ovetto" according to an embodiment of the present invention;
Figure 7 is a detail of the internal mechanism of the ISOfix coupling system;
Figure 8 is an exploded view of the mechanism of Figure 7.

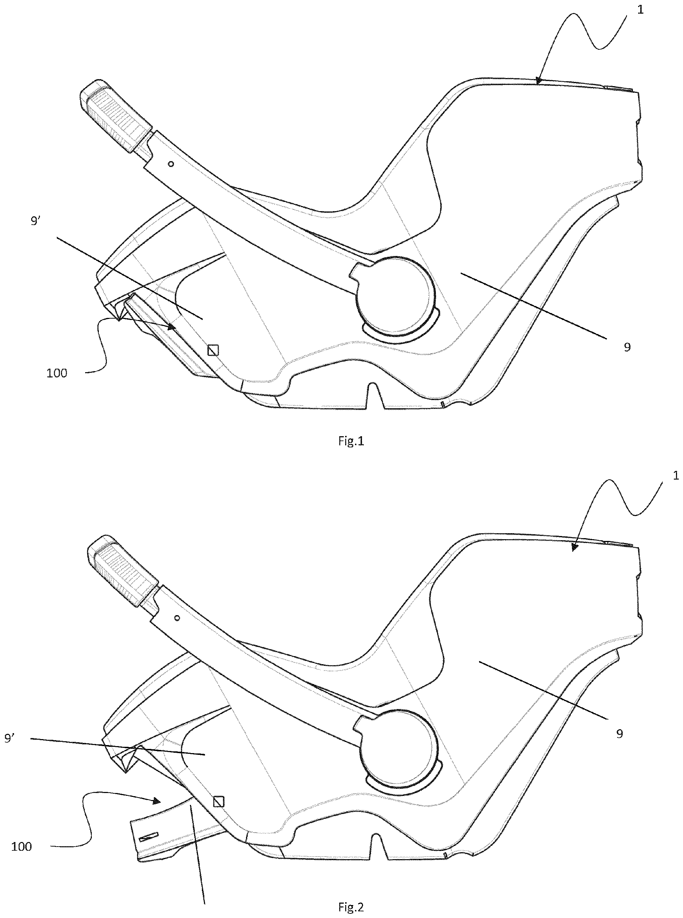

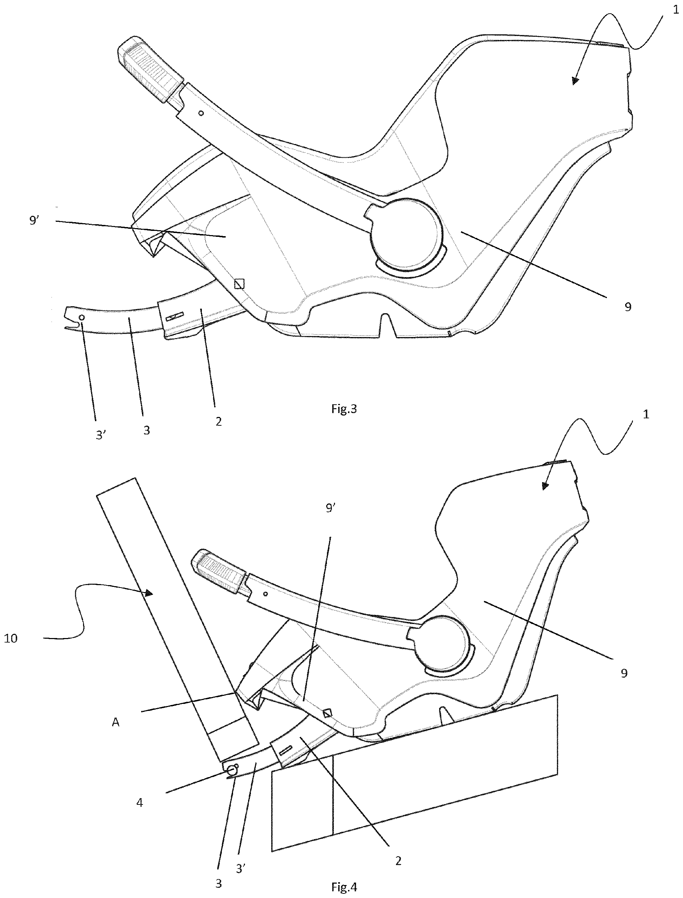

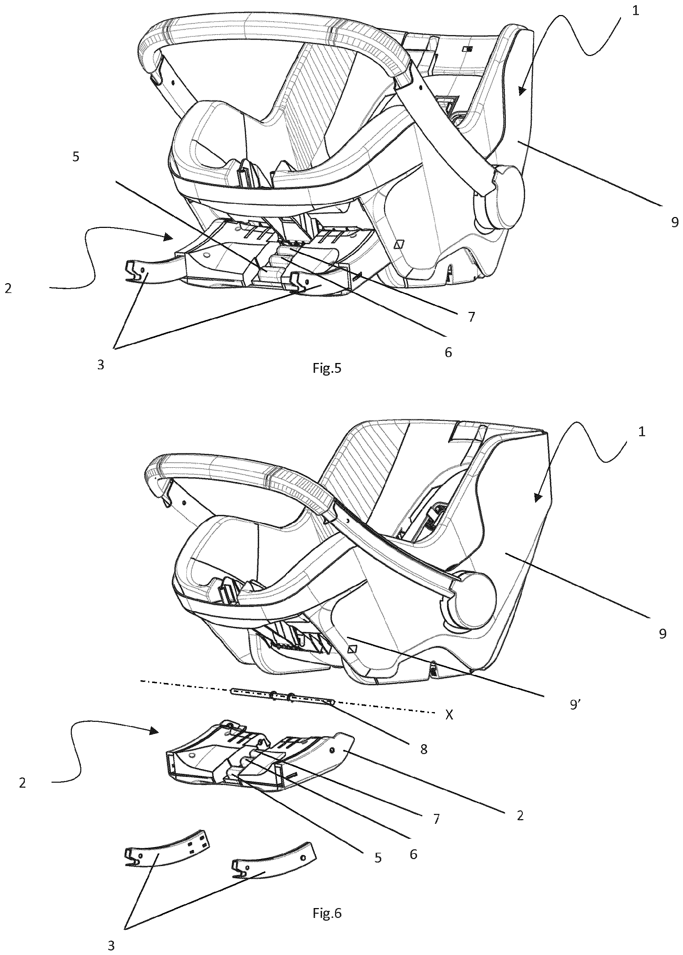

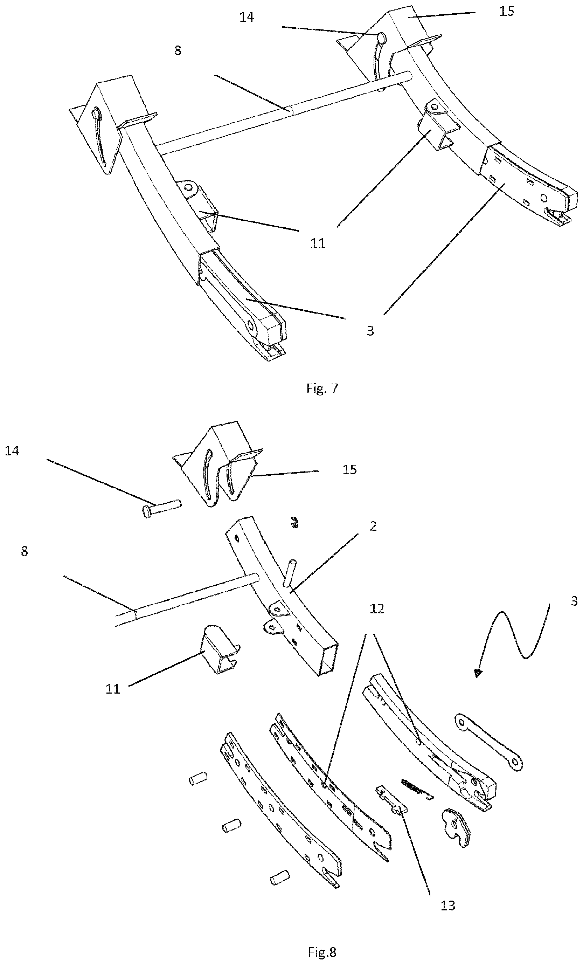

The car seat for children 1 of the present invention, as shown in Figures 1 to 6, comprises in the front 9 'of the body 9 of the car seat for children 1, an integrated ISOfix coupling system 100. It should be noted that the front 9 'of the body 9 conventionally is referred to the part on which the child's legs lie in the "Ovetto". Said ISOfix coupling system 100 includes a hidden small drawer 2 (or only small drawer), which can assume two configurations: a closed configuration when the "Ovetto" is transported or placed on a stroller (Figure 1) and an open configuration (Figures 2-3) when positioned on the car seat on which the "Ovetto" is to be connected. Inside of the small drawer 2, at the two lateral ends, the two ISOfix connectors 3 are located in their respective seats, as shown in Figures 3 to 6. The two ISOfix connectors 3 carry the ends of the hooks 3'. Figure 4 shows a detail of the connection between the hooks 3 'of the ISOfix 3 connectors and the rod 4 of the car seat 10. The coupling is made directly through the ISOfix coupling system 100 integrated in the car seat for children 1 and the rod 4 of the car seat 10 according to the known coupling modes of the ISOfix system itself. In this way, advantageously, there is no need for any additional base between the car seat for children and the car seat. Infact, the car seat for children can be directly and steadily hooked by means of the ISOfix coupling system integrated therein.
In addition, the ISOfix connectors 3 are adjustable in length to comfortably fit to any seat shape compatible with the different types of car.
As shown in Figure 5 and in the exploded view of Figure 6, there is a set of three buttons 5, 6, 7 inside the small drawer 2. Specifically, the first button 5, located on the outer part of the small drawer, allows to unlock and let come out the ISOfix coupling system 100 from the car seat for children 1 through the opening of the small drawer 2; the second button 6, centrally positioned, has the function of unlocking the ISOfix connectors 3 to extract them; and the third button 7, positioned in the lower part of the small drawer, is designed to open the hooks 3' of the ISOfix connectors 3 that connect the "Ovetto" to the car seat, when the "Ovetto" is unlocked.
According to a purely exemplary embodiment, the button 5 is realized as a known elastic hook and therefore not shown, which closes the small drawer 2 and is actuated by the user from the outside; as shown in Figures 7 and 8, button 6 moves two internal latches 11 which unlock the ISOfix connectors 3 to extract them and lock them in different positions through the holes 12 located on the connectors themselves. The adjustment of the connectors 3 length is automatically done by simply pushing the "Ovetto" towards the back of the car seat 10; button 7 is connected through a known internal system to the ISOfix connector 3 and moves the hook 3' by moving a metal plate 13 approximately 3 mm sized, located within the ISOfix connectors 3 and mechanically connected to the hook 3'.
To mount car seat for children 1 having an integrated ISOfix coupling system 100 to the car seat 10, after letting the "Ovetto" rest on the car seat, the user should press the first button 5 to unlock the ISOfix coupling system 100 and allowing the small drawer 2 opening; then press the second button 6 to unlock and allow the two ISOfix connectors 3 to come out from their seats inside the small drawer. Reached the maximum extension, the two ISOfix connectors 3 are locked (it is not possible by pushing them to retract the ISOfix connector in their seat). Finally, the user should push the "Ovetto" on the car seat until the hooks 3' of the ISOfix connectors 3 are engaged to the rods 4 of the car seat 10. At the same time and automatically the mechanism that keeps fixed the ISOfix connectors 3 is unlocked, making them adjustable. Once the ISOfix coupling system 100 is engaged, it is possible to adjust the length of the connectors 3 by pushing the car seat for children 1 until it stops against the back of the car seat 10 at point A shown in Fig.4. By means of a known internal mechanism, therefore not shown, the adjustable ISOfix connectors 3 are retracted by securely locking the car seat for children 1 against the car seat 10. To disconnect the "Ovetto" it is necessary to open the hooks 3' of the ISOfix connectors 3 by means of the third button 7, then retract the ISOfix connectors 3 simply by pushing them and finally close the small drawer 2.
A pin 8 connects the ISOfix coupling system 100 to the "Ovetto" body 9 and the small drawer 2 of the ISOfix coupling system 100 rotates around its X axis (Figure 6).
The force exerted on the ISOfix coupling system 100 is discharged principally on the pins 14, which in turn transfer the forces to the metal members 15. Consequently, such metal members 15 allow the distribution of the load to the plastic body 9 of the car seat for children 1 (Figures 7 and 8).
Advantageously, the integrated ISOfix coupling system 100 is completely hidden inside the "Ovetto" and therefore the "Ovetto" according to the present invention has a convenient use as a known "Ovetto".
The car seat for children 1 according to the present invention further comprises an additional fixing point on the car seat, called "Top Tether", configured as a "TT lazo" shaped without a "loop". Specifically, said fixing point comprises a conventional belt with hook and adjuster that at one end is fixed to the car seat while at the other end is closed as a fixed ring. The user positions said fixed ring around the perimeter of the "Ovetto", better to the back of the "Ovetto", where two seat belts preventing the belt from slipping are accomodated.
In addition to the embodiments of the invention, as previously described, it is to be understood that there are numerous further variants. It must also be understood that said embodiments are only exemplary and limit neither the subject of the invention nor its applications, nor its possible configurations. On the contrary, although the above description makes it possible to the skilled technician to implement the present invention at least according to one of its exemplary configuration, it should be understood that numerous variations are conceivable of the components described, without for this reason escaping from the scope of the invention, as defined in the appended claims, which are literally interpreted and/or according to their legal equivalents.

## Claims

1. Car seat for children (1) comprising a body (9) and an ISOfix coupling system (100) and **characterized in that** the ISOfix coupling system (100) is integrated in said car seat for children (1) and is accommodated inside of a hidden small drawer (2) and **in that** said hidden small drawer (2) is located in the front (9 ') of the body (9) of the car seat for children (1).

2. Car seat for children (1) according to claim 1, wherein said hidden small drawer (2) comprises at its lateral ends, in respective seats, two ISOfix connectors (3) each of them having at one end a hook (3 ').

3. Car seat for children (1) according to claim 1 or 2, wherein said hidden small drawer (2) is connected to the body (9) of the car child seat for children (1) by means of a pin (8) around whose axis (X) the hidden small drawer (2) is rotatable mounted.

4. Car seat for children (1) according to any claims from 1 to 3, wherein said hidden small drawer (2) comprises a set of buttons (5, 6, 7) for locking and unlocking the ISOfix coupling system (100) from the front (9') of the body (9) of the car seat for children (1).

5. Car seat for children (1) according to claim 4, wherein said first button (5) is located on the outer part of the hidden small drawer (2) and is configured to unlock and let come out the ISOfix coupling system (100) from the front (9') from the body (9) of the car seat for children (1) through the opening of the hidden small drawer (2).

6. Car seat for children (1) according to claim 4 or 5, wherein said second button (6) is centrally located with respect to said first button (5) and said third button (7) and is configured to come out the ISOfix connectors (3).

7. Car seat for children (1) according to any of claims from 4 to 6, wherein said third button (7) is located in the inner part of the hidden small drawer (2) and is configured to open the hooks (3') of the ISOfix connectors (3), said hooks (3') fastening the car seat for children (1) to the car seat (10).

8. Method for positioning a car seat for children (1) according to claims 1 to 7 in a car seat (10), comprising the following steps:
- pressing a first button (5) to unlock and let come out the ISOfix coupling system (100) and allow the opening of a hidden small drawer (2);
- pressing a second button (6) to unlock and allow the ISOfix connectors (3) to come out of their seats inside the hidden small drawer (2) to the extended position;
- advancing the car seat for children (1) on the car seat (10) until the hooks (3') of the ISOfix connectors (3) engage the car seat (10) rods (4) and simultaneously and automatically, the mechanism that keeps fixed the ISOfix connectors (3) is unlocked, making them adjustable;
- pushing the car seat for children (1) up to the back of the car seat (10) so that the adjustable ISOfix connectors (3) automatically retract when locked in the correct position.
